# EUROPEAN PATENT APPLICATION

(11) **EP 4 801 117 A1**
(43) Date of publication of application: **02.09.2026**
(21) Application number: 26160339.3
(22) Date of filing: 24.02.2026
(51) Int. Cl.: H04W 48/12, H04W 84/12

(54) **OPTIMIZED BEACON PAYLOADS**

(30) Priority: 27.02.2025 US 202519066103
(71) Applicant: Avago Technologies International Sales Pte. Limited, Singapore 768923 (SG)
(72) Inventor: Dutta, Mahesh H K, 560100 Bangalore, Karnataka (IN); Sahoo, Jimut Ranjan, 560100 Bangalore, Karnataka (IN); Kumar, Sandeep, 560100 Bangalore, Karnataka (IN); Buhari, Nizamudeen Mohamed, 560100 Bangalore, Karnataka (IN)
(74) Representative: Dilg, Haeusler, Schindelmann Patentanwaltsgesellschaft mbH

(57) **Abstract**

An access point (AP) point in a wireless local area network (WLAN) may include circuitry configured to transmit, to a station (STA) in the WLAN, a beacon including a beacon payload. A first set of information elements associated with the access point may be advertised within the beacon payload. The beacon payload may include an indicator indicating that the AP is associated with a second set of information elements that is not advertised in the beacon payload. The STA may include circuitry configured to transmit, to the AP, a request for the second set of information elements. The STA may receive, from the AP and in response to the request, a response including an indication of the second set of information elements.

## Description

### BACKGROUND

A beacon is a type of management frame transmitted by an access point (AP) at regular intervals to announce a presence of a network and/or to provide information associated with the AP. Beacons serve several purposes, such as facilitating network discovery and maintaining synchronization between devices in the network.

### SUMMARY

Some implementations described herein provide an access point, point in a wireless local area network (WLAN), comprising: circuitry configured to: transmit, to a station in the WLAN, a beacon including a beacon payload, wherein a first set of information elements associated with the access point is advertised within the beacon payload, and wherein the beacon payload includes an indicator indicating that the access point is associated with a second set of information elements that is not advertised in the beacon payload.

Some implementations described herein provide a station in a WLAN, comprising: circuitry configured to: receive, from an access point in the WLAN, a beacon including a beacon payload, wherein a first set of information elements associated with the access point is advertised within the beacon payload, and wherein the beacon payload includes an indicator indicating that the access point is associated with a second set of information elements that is not advertised in the beacon payload.

Some implementations described herein provide a for optimized communications in a WLAN, the method comprising: generating, by a device, a beacon including a beacon payload, wherein a first set of information elements, associated with an access point in the WLAN, is advertised within the beacon payload, and wherein the beacon payload includes an indicator indicating that the access point is associated with a second set of information elements that is not advertised in the beacon payload; and transmitting, by the device and to a station in the WLAN, the beacon.

### BRIEF DESCRIPTION OF THE DRAWINGS

Fig. 1A is a diagram of an example network environment.
Figs. 1B-1C are diagrams of example components of a computing device associated with optimized beacon payloads.
Figs. 2A-2C are diagrams of an example associated with optimized beacon payloads.
Fig. 3 is an example sequence diagram associated with optimized beacon payloads.
Fig. 4 is an example sequence diagram associated with optimized beacon payloads.
Fig. 5 is an example sequence diagram associated with optimized beacon payloads.
Fig. 6 is a flowchart of an example process associated with optimized beacon payloads.
Fig. 7 is a flowchart of an example process associated with optimized beacon payloads.

### DETAILED DESCRIPTION

The following detailed description of example implementations refers to the accompanying drawings. The same reference numbers in different drawings may identify the same or similar elements.

The following standards, including any draft versions of such standards, are hereby incorporated by reference in their entirety and are made a part of the present disclosure for all purposes: Wireless Fidelity (Wi-Fi^{®}) Alliance^{®} standards and Institute of Electrical and Electronics Engineers (IEEE^{®}) 802.11 standards, including, but not limited to, 802.11^{™}, 802.11a^{™}, 802.11b^{™}, 802.11g^{™}, 802.11n^{™}, 802.11ac^{™}, 802.11ax^{™}, 802.11be^{™}, 802.11ad^{™}, 802.11ay^{™}, 802.11af^{™}, 802.11ah^{™}, 802.11ai^{™}, 802.11aj^{™}, 802.11ak^{™}, 802.11aq^{™}, 802.11ba^{™}, 802.11c^{™}, 802.11d^{™}, 802.11e^{™}, 802.11f^{™}, 802.11h^{™}, 802.11i^{™}, and 802.11j^{™}. Although the present disclosure may reference aspects of these standard(s), this disclosure is in no way limited by these standard(s).

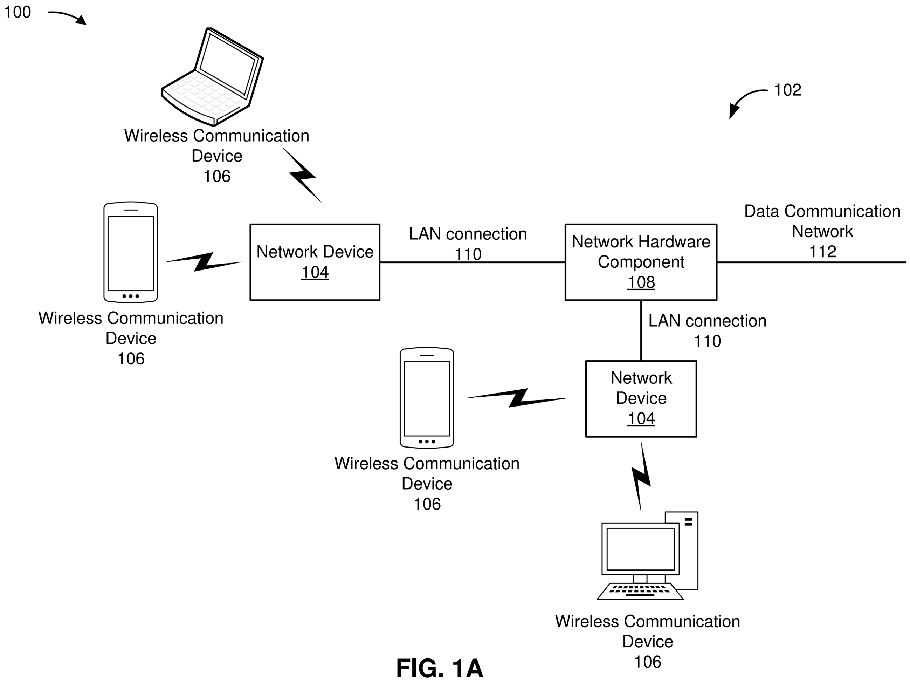

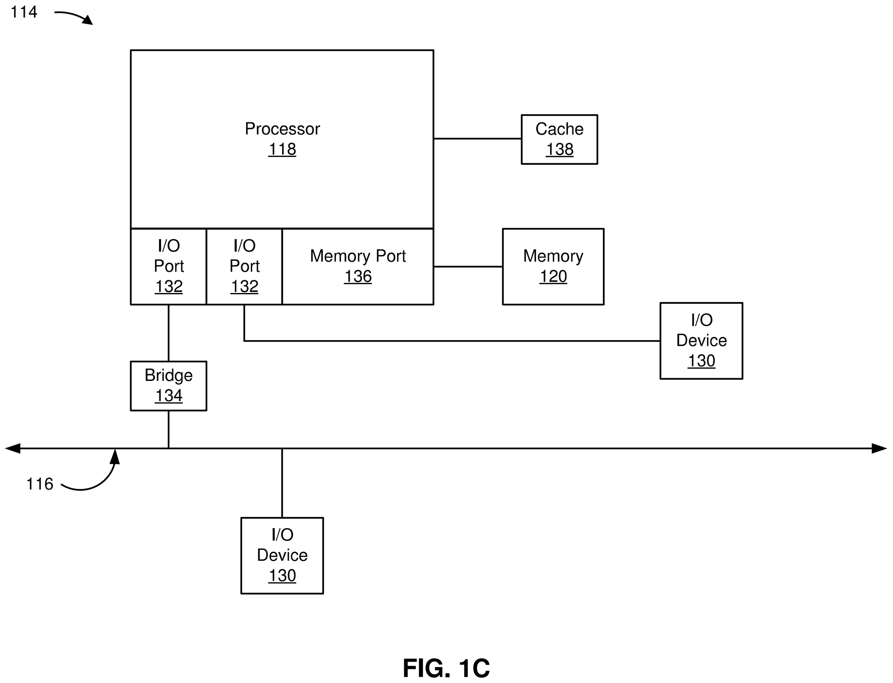

Fig. 1A is a diagram of an example environment (e.g., an example network environment 100) in which systems and/or methods described herein may be implemented. As shown in Fig. 1A, the network environment 100 includes a wireless communication system 102. In some implementations, the wireless communication system 102 may include devices and/or components that facilitate data transmission and/or connectivity via a network (e.g., a wired and/or a wireless network). For example, the wireless communication system 102 may include a network device, which may also be referred to herein as an access point (AP) or a wireless AP, a wireless communication device, which may also be referred to herein as a station (STA), and a network hardware component, which may also be referred to herein as a node.

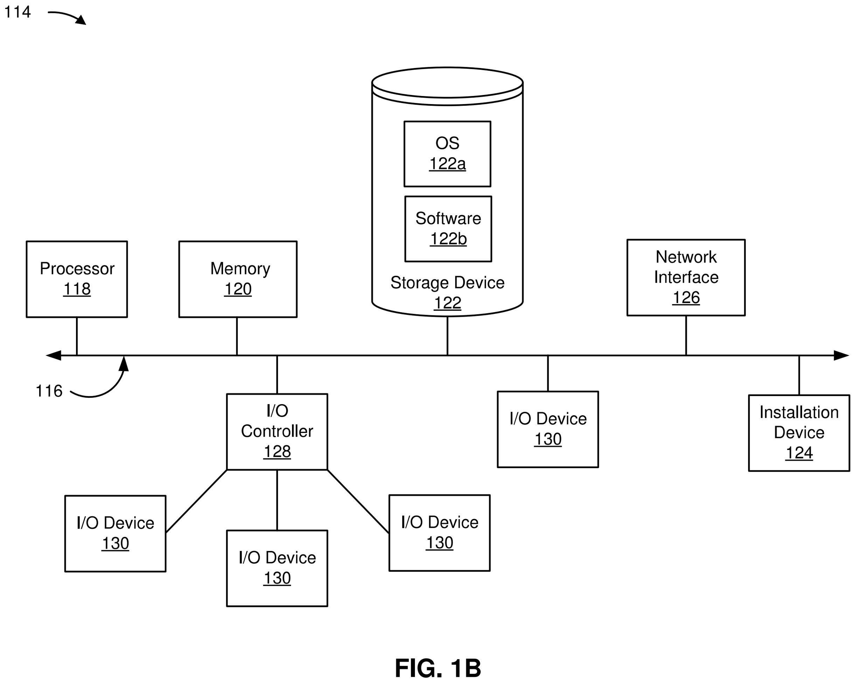

Communication among the network device, the wireless communication device, and/or the network hardware component may be enabled via a network (e.g., a wired and/or a wireless network connection). The network device, the wireless communication device, and the network hardware component are depicted and described in more detail in connection with Figs. 1B-1C and/or as described in more detail elsewhere herein.

In some implementations, the network may include any type and/or form of network. As an example, the network may include a point-to-point network, a broadcast network, a telecommunications network, a data communication network, and/or a computer network, among other examples. The network may include any suitable network topology, such as a bus, a star, and/or a ring network topology, among other examples. Accordingly, for example, the network may be any suitable network topology capable of supporting the systems and methods described herein.

In some implementations, the network may include a wireless wide area network (WAN) (e.g., a cellular network or a public land mobile network), a local area network (LAN) (e.g., a wired LAN or a wireless local area network (WLAN), such as a Wi-Fi^{®} network), a wireless personal area network (WPAN) (e.g., a Bluetooth^{®} network), a near-field communication network, a Zigbee^{®} network, a long range wide area network (LoRaWAN^{®}), an ultra-wideband (UWB) network, a worldwide interoperability for microwave access (WiMAX^{®}) network, a satellite network, a telephone network, a private network, the Internet, or a combination of these and other network types. Additionally, in some implementations, different types of data may be transmitted using different protocols, and the same type of data may also be transmitted using multiple protocols.

The network device may include an antenna, or antenna array, to communicate with the wireless communication device (e.g., within a coverage area of the network device). In some implementations, the network device may include one or more devices, such as Wi-Fi^{®} APs that facilitate WLANs and/or cellular base stations (e.g., fifth generation (5G) base stations) that provide network connectivity for cellular communication systems. The network device may enable wireless connectivity for the wireless communication device by managing data transmission and ensuring proper communication within a respective network environment.

In some implementations, the network device may enable the wireless communication device to connect to a wired network using standards, such as Wi-Fi^{®} standards and/or 802.11 standards. The network device may be implemented (e.g., configured, designed and/or built) for operating in a WLAN.

In some implementations, the network device may connect to a router (e.g., via a wired network) as a standalone device. In some implementations, the network device may be a component of a router. The network device may provide multiple devices (e.g., multiple wireless communication devices) access to a network. The network device may connect to a wired ethernet connection and provide wireless connections using radio frequency (RF) links for other devices (e.g., other wireless communication devices) to utilize that wired connection. The network device may be implemented to support a standard (e.g., a standard defined by the IEEE). The network device may be configured and/or used to support public Internet hotspots, and/or on a network to extend a Wi-Fi^{®} signal range of the network.

In some implementations, the network device may be used for wireless networks in various environments (e.g., in-home, in-vehicle, and/or in-building environments) utilizing protocols, such as IEEE 802.11, Bluetooth, ZigBee, and/or any other RF-based protocol, including variations thereof. The wireless communication device may include a radio (e.g., a built-in radio) and/or may be operably coupled to an external radio. The network device and the wireless communication device may operate in accordance with various aspects of the disclosure as described herein, which may enhance performance, reduce costs and/or size, and/or improve broadband applications, among other examples. Each wireless communication device may function as a client node seeking access to resources (e.g., data and connections to networked nodes, such as servers) via one or more network devices.

The wireless communication device may include one or more devices, such as smartphones, laptops, tablets, internet-of-things (IoT) devices, and/or other mobile devices, that connect to network devices (e.g., APs or base stations) to access network services. These wireless communication devices may manage data reception and transmission through established wireless connections and interact with the network environment to facilitate communication.

The network hardware component may include one or more devices, such as routers, gateways, switches, and/or other networking components, that provide wired or wireless connectivity and enable communication within an LAN connection and/or between devices (e.g., network devices and/or wireless communication devices) in a network environment. The network hardware components may route data, manage network traffic, and/or ensure communication integrity between devices (e.g., network devices and/or wireless communication device) within a wireless network system.

In some implementations, the wireless communication device may register with a network device to receive services from the wireless communication system 102 (e.g., via a single-user multiple-input multiple-output (SU-MIMO) configuration or a multi-user multiple-input multiple-output (MU-MIMO) configuration, among other examples). For direct connections (e.g., point-to-point communications), wireless communication devices may communicate directly via an allocated channel and communications protocol. Additionally, in some implementations, the wireless communication devices may be mobile and/or static (e.g., relatively static) with respect to the network device.

The network devices and/or the wireless communication devices may be deployed as, and/or executed on, any type and/or form of computing device, such as a computer, a network device, and/or an appliance capable of communicating on any type and/or form of network and performing the operations described herein.

As further shown in Fig. 1A, the network environment 100 includes network devices 104 (e.g., APs), wireless communication devices 106 (e.g., STAs), and a network hardware component 108 (e.g., a node). The network hardware component 108 may provide network connections (e.g., shown as LAN connections 110 and a data communication network 112 in Fig. 1A) for the wireless communication system 102. The network devices 104 may be operably coupled to the network hardware component 108 via the LAN connections 110. Although the network hardware component 108 is shown and described in connection with Fig. 1A as providing the LAN connections 110 and the data communication network 112, the network hardware component 108 may provide any suitable network connections.

The number and arrangement of devices and networks shown in Fig. 1A are provided as an example. In practice, there may be additional devices and/or networks, fewer devices and/or networks, different devices and/or networks, or differently arranged devices and/or networks than those shown in Fig. 1A. Furthermore, two or more devices shown in Fig. 1A may be implemented within a single device, or a single device shown in Fig. 1A may be implemented as multiple, distributed devices. Additionally, or alternatively, a set of devices (e.g., one or more devices) of the network environment 100 may perform one or more functions described as being performed by another set of devices of the network environment 100.

Figs. 1B-1C are diagrams of an example computing device 114, as described herein. The computing device 114 may correspond to a network device (e.g., the network devices 104), a wireless communication device (e.g., the wireless communication devices 106), and/or a network hardware component (e.g., the network hardware component 108). In some implementations, a network device (e.g., the network devices 104), a wireless communication device (e.g., the wireless communication devices 106), and/or a network hardware component (e.g., the network hardware component 108) may include the computing device 114.

As shown in Figs. 1B-1C, the computing device 114 includes a bus 116 (e.g., a system bus), a processor 118 (e.g., a CPU), a memory 120 (e.g., a main memory), a storage device 122, an installation device 124, a network interface 126, an input/output (I/O) controller 128, I/O devices 130, an I/O port (e.g., shown as I/O ports 132), a bridge 134, a memory port 136, and a cache 138.

The bus 116 may include one or more components that enable wired and/or wireless communication among the components of the computing device 114. The bus 116 may couple together two or more components of Figs. 1B-1C, such as via operative coupling, communicative coupling, electronic coupling, and/or electric coupling. For example, the bus 116 may include an electrical connection (e.g., a wire, a trace, and/or a lead, among other examples) and/or a wireless bus. Furthermore, when an element is referred to herein as being "connected" or "coupled" to another element, it should be understood that the elements may be directly connected to the other element, or have intervening elements present between the elements. In contrast, when an element is referred to as being "directly connected" or "directly coupled" to another element, it should be understood that no intervening elements are present in the "direct" connection between the elements. However, the existence of a direct connection does not exclude other connections, in which intervening elements may be present.

The processor 118 may include a central processing unit (CPU), a graphics processing unit (GPU), a microprocessor, a controller, a microcontroller, a digital signal processor, a field-programmable gate array (FPGA), an application-specific integrated circuit (ASIC), and/or another type of processing component and/or circuitry. The processor 118 may be implemented in hardware, software, and/or a combination of hardware and software. In some implementations, the processor 118 may include one or more processors capable of being programmed to perform one or more operations or processes as described herein.

The memory 120 may include volatile and/or nonvolatile memory. For example, the memory 120 may include random access memory (RAM), read-only memory (ROM), a hard disk drive, and/or another type of memory (e.g., a flash memory, a magnetic memory, and/or an optical memory). The memory 120 may include internal memory (e.g., RAM, ROM, or a hard disk drive) and/or removable memory (e.g., removable via a universal serial bus (USB) connection). The memory 120 may be a non-transitory computer-readable medium. The memory 120 may store information, one or more instructions, and/or software (e.g., one or more software applications) related to the operation of the computing device 114. In some implementations, the memory 120 may include one or more memories that are coupled (e.g., communicatively coupled) to one or more processors (e.g., the processor 118), such as via a bus (e.g., the bus 116). Communicative coupling between the processor 118 and the memory 120 may enable the processor 118 to read and/or process information stored in the memory 120 and/or to store information in the memory 120.

In some implementations, the memory 120 may include one or more memory chips capable of storing data and/or allowing a storage location to be accessed (e.g., directly accessed) by the processor 118, such as any type or variant of static random-access memory (SRAM), dynamic random-access memory (DRAM), ferroelectric RAM (FRAM), not-and (NAND) flash memory, not-or (NOR) flash memory, and/or solid state drives (SSDs). The memory 120 may be based on any suitable memory chips capable of operating as described herein. As shown in Fig. 1B, the processor 118 may communicate with the memory 120 via the bus 116, as described in more detail elsewhere herein. As further shown in Fig. 1B, the storage device 122 may include an operating system (OS) 122a and software 122b.

In some implementations, the processor 118 may communicate directly with the cache 138 (e.g., via a secondary bus, which is sometimes referred to as a backside bus). In some implementations, the processor 118 may communicate with the cache 138 using the bus 116. In some implementations, the cache 138 may be provided by SRAM, block static random-access memory (BSRAM,) and/or embedded dynamic random-access memory (EDRAM). In some implementations, the processor 118 may communicate with the I/O devices 130 via the bus 116. Various buses may be used to connect the processor 118 to any of the I/O devices 130, such as a video electronics standards association (VESA) local bus (VESA VL), an industry standard architecture (ISA) bus, an extended industry standard architecture (EISA) bus, a microchannel architecture (MCA) bus, a peripheral component interconnect extended (PCI) bus, a peripheral component interconnect extended (PCI-X) bus, a PCI-Express (PCle) bus, and/or a NuBus.

In some implementations, the I/O devices 130 may include a display device such as a video display, and the processor 118 may use an advanced graphics port (AGP) to communicate with the video display. In some implementations, the processor 118 may communicate directly with the I/O devices 130 (e.g., via HYPERTRANSPORT, RAPIDIO, or INFINIBAND communications technology). In some implementations, local busses and/or direct communication may be utilized (e.g., the processor 118 may communicate with the I/O devices 130 using a local interconnect bus and/or directly).

The I/O devices 130 may include one or more input devices that enable the computing device 114 to receive input, such as user input and/or sensed input. For example, the input devices may include one or more touch screens, keyboards, keypads, mice, trackpads, trackballs, dials, touch pads, drawing tablets, buttons, microphones, switches, sensors, global positioning system (GPS) sensors, accelerometers, gyroscopes, and/or actuators, among other examples.

The I/O devices 130 may include one or more output devices that enable the computing device 114 to provide output. For example, the I/O devices 130 may include one or more video displays, speakers, inkjet printers, laser printers, projectors, dye-sublimation printers, and/or light-emitting diodes (LEDs), among other examples.

An I/O controller (e.g., the I/O controller 128) may control the I/O devices 130. For example, the I/O controller 128 may control one or more keyboards and/or pointing device (e.g., mice and/or optical pens), among other examples. Furthermore, an I/O device (e.g., of the I/O devices 130) may provide storage and/or an installation medium for the computing device 114. In some implementations, the computing device 114 may provide universal serial bus (USB) connections to receive handheld USB storage devices.

The installation device 124 may be any suitable installation device, such as a disk drive, a CD-ROM drive, a CD-R/RW drive, a DVD-ROM drive, a flash memory drive, a tape drive (e.g., one or more tape drives of various formats), a USB device, a hard-drive, a network interface, and/or any other device suitable for installing software (e.g., the software 122b) and/or programs. In some implementations, the computing device 114 may include a storage device, such as one or more hard disk drives and/or redundant arrays of independent disks, for storing an operating system (OS) (e.g., the OS 122a) and/or other software, and/or for storing application software programs, such as any program or software for implementing (e.g., configured and/or designed for) the systems and methods described herein. Additionally, or alternatively, the installation device 124 may also be used as the storage device 122. Additionally, or alternatively, the OS 122a and/or the software 122b may be run from any bootable medium.

The network interface 126 may enable the computing device 114 to interface with a network via a connection, such as via telecommunication lines, LANs and/or WAN links (e.g., 802.11, T1, T3, 56kb, X.25, SNA, DECNET), broadband connections (e.g., ISDN, Frame Relay, ATM, Gigabit Ethernet, Ethernet-over-SONET), wireless connections, and/or some combination of any or all of the above. In some implementations, connections may be established using one or more communication protocols, such as TCP/IP, IPX, SPX, NetBIOS, Ethernet, ARCNET, SONET, SDH, Fiber Distributed Data Interface (FDDI), RS232, IEEE 802.11 (including versions 802.11a, 802.11b, 802.11g, 802.11n, 802.11ac, and 802.11ad), CDMA, GSM, WiMax, and/or direct asynchronous connections.

In some implementations, the computing device 114 may communicate with other computing devices via any type and/or form of gateway and/or tunneling protocol, such as a secure socket layer (SSL) protocol and/or a transport layer security (TLS) protocol. The network interface 126 may include a network adapter (e.g., a built-in network adapter), a network interface card, a personal computer memory card international association (PCMCIA) network card, a card bus network adapter, a wireless network adapter, a USB network adapter, a modem, and/or or any other device suitable for interfacing the computing device 114 to any type of network capable of communicating and/or performing the operations as described herein.

In some implementations, the computing device 114 may include, or be connected to, one or more display devices (e.g., the I/O devices 130 may include one or more display devices). Accordingly, the I/O devices 130 and/or the I/O controller 128 may include any type and/or form of suitable hardware, software, or combination of hardware and software to support, enable, and/or provide for the connection and use of the one or more display devices by the computing device 114. For example, the computing device 114 may include any type and/or form of video adapter, video card, driver, and/or library to interface, communicate, connect, and/or otherwise use the one or more display devices.

In some implementations, a video adapter may include multiple connectors to interface to the one or more display devices. In some implementations, the computing device 114 may include multiple video adapters, with each video adapter connected to the one or more display devices. In some implementations, any portion of the OS 122a of the computing device 114 may be configured for using multiple display devices. In some implementations, an I/O device (e.g., of the I/O devices 130) may be a bridge between the bus 116 and an external communication bus, such as a USB bus, an Apple Desktop Bus, an RS-232 serial connection, a SCSI bus, a FireWire bus, a FireWire 800 bus, an Ethernet bus, an AppleTalk bus, a Gigabit Ethernet bus, an asynchronous transfer mode bus, a FibreChannel bus, a fiber optic bus, a serial attached small computer system interface bus, a USB connection, and/or an HDMI bus.

In some implementations, an OS (e.g., the OS 122a) may control the computing device 114. For example, the OS may control scheduling of tasks and/or access to resources (e.g., system resources). The computing device 114 may run any suitable OS, such as any suitable version of MICROSOFT WINDOWS OSs, Unix OSs, Linux OSs, MAC OSs (e.g., for Macintosh computers), any embedded operating system, any real-time operating system, any open source operating system, any proprietary operating system, any operating systems for mobile computing devices, and/or any other operating system capable of running on the computing device 114 and performing the operations described herein.

In some implementations, the computing device 114 may be any type of computing, telecommunications, and/or media device (e.g., including one or more processors, memories, OSs, and/or I/O devices, among other examples) capable of communication and that has sufficient processor power and memory capacity to perform the operations described herein. For example, the computing device 114 may be a workstation, a telephone, a desktop computer, a laptop, a server, a handheld computer, a mobile phone, a tablet, a personal digital assistant (PDA), a media player, a gaming system, and/or a mobile computing device, among other examples.

In some implementations, the computing device 114 may perform one or more operations or processes described herein. For example, a non-transitory computer-readable medium (e.g., the memory 120) may store a set of instructions (e.g., one or more instructions or code) for execution by the processor 118. The processor 118 may execute the set of instructions to perform one or more operations or processes described herein. In some implementations, execution of the set of instructions, by one or more processors (e.g., the processor 118), causes the one or more of the processors and/or the computing device 114 to perform one or more operations or processes described herein. In some implementations, hardwired circuitry may be used instead of or in combination with the instructions to perform one or more operations or processes described herein. Additionally, or alternatively, the processor 118 may be configured to perform one or more operations or processes described herein. Thus, implementations described herein are not limited to any specific combination of hardware circuitry and software.

The number and arrangement of components shown in Figs 1B-1C. are provided as an example. The computing device 114 may include additional components, fewer components, different components, or differently arranged components than those shown in Figs. 1B-1C. Additionally, or alternatively, a set of components (e.g., one or more components) of the computing device 114 may perform one or more functions described as being performed by another set of components of the computing device 114.

Aspects of the example environment and the example device described above will become apparent in the context of the systems and methods disclosed herein.

Beacons (e.g., beacon frames) may be used to convey information (e.g., via beacon payloads) among devices (e.g., APs and/or STAs) within a network (e.g., a wireless network). The beacon payloads may include data structures, such as information elements (IEs), that carry this information. The IEs may be used to convey various types of information, including AP capability information, supported data rates, security features, and/or other network parameters, enabling the STAs to join and interact with the network.

As new standards, such as updated IEEE 802.11 standards, introduce new features (e.g., enhanced features associated with improved network performance, efficiency, and/or security), the AP may include new IEs (e.g., additional IEs) in the beacon payloads to communicate support for these new features (e.g., to the connected STAs). However, including the new IEs in the beacon payloads increases a size of the beacon payloads, which can present challenges.

For example, larger beacon payloads consume more of the communication medium (e.g., relative to smaller beacon payloads without the new IEs), reducing an available bandwidth for other transmissions, such as data traffic. In environments with multiple APs and/or multiple STAs, increased beacon payload sizes can lead to greater contention and degradation of network performance. For example, in a 2.4 GHz band, which is increasingly crowded with IoT devices, a single beacon transmission may take approximately 5 milliseconds (ms). As a result, a combination of larger beacon payloads and a growing number of IoT devices occupies a significant portion of the communication medium, leaving minimal bandwidth for data traffic and negatively impacting overall network efficiency.

Furthermore, while STAs that do not support the new features may ignore the new IEs in the beacon payloads, processing larger beacon payloads demands more energy, which negatively effects battery-powered devices, such as battery-powered STAs. The battery-powered devices frequently receive and process beacons to maintain connectivity with the network, and larger beacon payloads require more processing power, reducing battery life and introducing inefficiencies.

Additionally, while some information in the beacon payloads remains static (e.g., some IEs are associated with information that does not change or that does not change frequently), the AP typically includes this static information in every beacon transmitted by the AP. This redundancy contributes to inefficient use of the communication medium, as a combined effect of multiple APs transmitting larger beacons further reduces the available bandwidth for other data transmissions, compounding inefficiencies and degrading overall network performance.

Some implementations described herein provide systems and methods associated with optimized beacon payloads. To optimize the beacon payloads, an AP may include an indicator in a beacon payload of a beacon to indicate that the AP is associated with a set of IEs not indicated by the beacon payload, as described in more detail elsewhere herein.

In some implementations, the AP may determine the set of IEs to refrain from including in the beacon payload by categorizing the IEs, associated with the AP, into one or more types. For example, the AP may categorize the IEs as non-hidden IEs and hidden IEs (e.g., based on factors associated with the IEs, such as temporal characteristics of the IEs, a relevancy of the IEs to network operations, and/or visibility requirements of the IEs, among other examples). As an example, the non-hidden IEs may include information associated with maintaining proper operation of the network and/or information changes frequently (e.g., dynamic information representing real-time, or near real-time, network and/or environmental conditions). As another example, the hidden IEs may include information that does not change or that does not change frequently (e.g., the hidden IEs may include information related to capabilities of the AP that typically remain static and/or that do not change frequently).

Accordingly, in some implementations, the AP may include the non-hidden IEs (e.g., that are associated with maintaining proper operation of the network and/or that are associated with dynamic information) in a beacon payload of a beacon and may refrain from including the hidden IEs (e.g., which are associated with information that does not change or that does not change frequently) in the beacon payload of the beacon. The AP may include an indicator (e.g., a new IE defined according to an 802.11 standard, among other examples) in the beacon payload that indicates that the AP is associated with the hidden IEs (e.g., which are not indicated by the beacon payload). In some implementations, the indicator may allow a device, such as an STA, to determine that the AP is associated with the hidden IEs (e.g., not indicated by the beacon payload). The STA may then request an indication of the hidden IEs from the AP, as described in more detail elsewhere herein.

As a result, a size of a beacon payload of a beacon transmitted by the AP is smaller relative to a size of a typical beacon payload of a typical beacon transmitted by a typical AP (e.g., because the typical AP cannot refrain from including IEs in the typical beacon payload based on a type of the IE). This reduction in the size of the beacon payload relative to the size of the typical beacon payload decreases a usage of the communication medium, freeing up bandwidth that can be utilized for other communications (e.g., data traffic). Additionally, this reduction in the size of the beacon payload helps lower latency and enhances throughput by eliminating redundant information that remains unchanged over extended periods (e.g., because the AP may refrain from including IEs associated with static information in the beacon payload). Furthermore, this reduction in the size of the beacon payload helps STAs conserve battery power (e.g., because less energy is required to process the beacon payload relative to energy required to process typical beacon payloads).

In some implementations, an AP may include circuity configured to transmit a beacon including a beacon payload. The beacon payload may include an indicator that the AP is associated with a set of IEs not indicated by the beacon payload. In this way, the AP may refrain from including the set of IEs in the beacon payload of the beacon. Although the set of IEs is not included in the beacon payload of the beacon, the AP may provide an indication of the set of IEs, such as via including the indication of the set of IEs in a payload of one or more communications (e.g., one or more association responses and/or probe responses, among other examples).

In some implementations, the indicator may be a new IE defined according to an 802.11 protocol. In some implementations, the AP may receive a probe request requesting an indication of the set of IEs. The AP may transmit, based on the probe request, a probe response including the indication of the set of IEs.

In some implementations, the beacon payload may indicate an IE that is not included in the set of IEs. For example, the beacon payload may include a set of non-hidden IEs (e.g., a set of advertised IEs). In some implementations, the AP may transmit a response (e.g., an association response and/or a probe response, among other examples) including a response payload. The response payload may indicate a set of hidden IEs.

In some implementations, the AP may transmit a subsequent beacon including a subsequent beacon payload. The subsequent beacon payload may include a modification indicator identifying that that the set of IEs has been modified into a modified set of IEs. The modified set of IEs may not be indicated by the subsequent beacon payload. The AP may receive a probe request requesting an indication of the modified set of IEs. The AP may transmit, based on the probe request, a probe response including the indication of the modified set of IEs.

In some implementations, an STA may receive a beacon, associated with an AP of a network (e.g., a wireless network), including a beacon payload. The beacon payload may include an indicator that the AP is associated with a set of IEs not indicated by the beacon payload. In some implementations may be an IE defined according to an 802.11 protocol.

In some implementations, the beacon may be received based on at least one of a passive scan operation performed by the STA or an active scan operation performed by the STA.

In some implementations, the STA may transmit a probe request requesting an indication of the set of IEs. The STA may receive, based on the probe request, a probe response including the indication of the set of IEs.

In some implementations, the beacon may be received after the STA is associated to the AP. In some implementations, the STA may receive a subsequent beacon, associated with the AP of the network, including a subsequent beacon payload. The subsequent beacon payload may include a modification indicator identifying that the set of IEs has been modified into a modified set of IEs. The modified set of IEs may not be indicated by the subsequent beacon payload. The STA may transmit a probe request requesting an indication of the modified set of IEs. The STA may receive, based on the probe request, a probe response including the indication of the modified set of IEs. In some implementations, the beacon may be received according to a listen interval associated with a power-save mode of the STA.

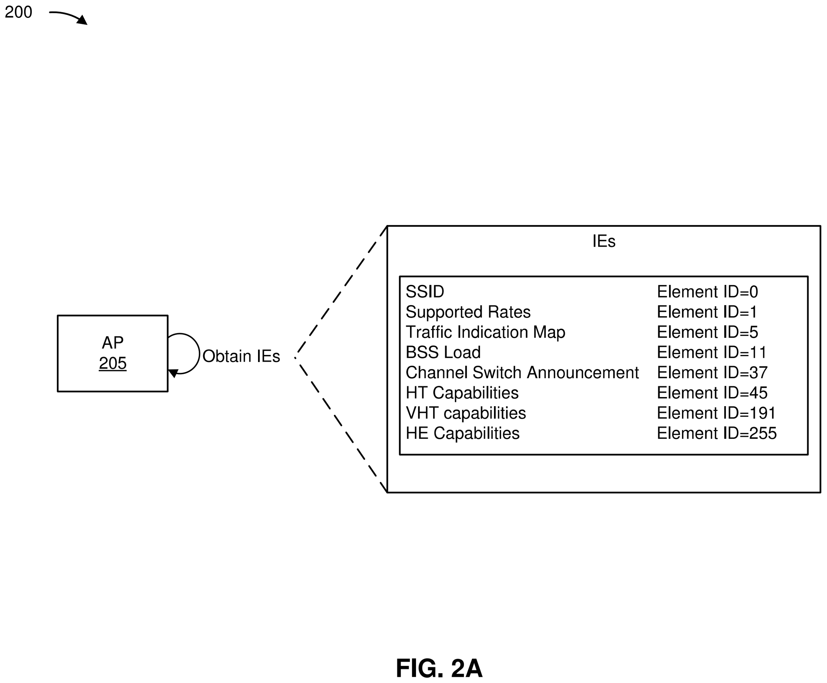

Figs. 2A-2C are diagrams of an example 200 associated with optimized beacon payloads. As shown in Figs. 2A-2C, the example 200 includes an AP 205 and an STA 210. In some implementations, the AP 205 may transmit beacons including beacon payloads, which may be received and processed by the STA 210, as described in more detail elsewhere herein.

As shown in Fig. 2A, the AP 205 may obtain IEs. For example, the AP 205 may obtain the IEs via one or more processes, such as via extracting and/or processing configuration settings (e.g., associated with the AP 205), monitoring the network, interpreting device capabilities (e.g., capabilities of the AP 205 and/or STAs in proximity to the AP 205), and/or assessing real-time (or near real-time) network and/or environmental conditions, among other examples.

Each IE may be associated with a unique identifier field, a length field, and/or a data field. The unique identifier field may include an element identifier (element ID) that specifies a type of information conveyed. The length field may indicate a size of data included in the data field. The data field may indicate information, such as one or more network parameters and/or capabilities, among other examples. Accordingly, the AP 205 may utilize the IEs to convey information associated with one or more discovery operations, synchronization operations, and/or connectivity operations, among other examples.

In some implementations, the AP 205 may obtain a service set identifier (SSID) IE (e.g., identified by element ID: 0), a supported rates IE (e.g., identified by element ID: 1), a traffic indication map (TIM) IE (e.g., identified by element ID: 5), a BSS load IE (e.g., identified by element ID: 11), and/or a channel switch announcement IE (e.g., identified by element ID: 37).

The AP 205 may obtain the SSID IE by referencing configuration settings of the AP 205 (e.g., where the SSID is typically stored in a memory associated with the AP 205). The SSID IE may uniquely identify the network associated with the AP 205 and may be included in the beacon payload to announce an availability (or a presence) of the network. The AP 205 may generate the supported rates IE by referencing capabilities of the AP 205, such as data rates that the AP 205 supports for communication. The AP 205 may include the supported rates IE in a beacon payload of a beacon to inform STAs about available data rates supported by the AP 205 for potential connections. Accordingly, for example, the SSID IE and the supported rates IE may include information associated with ensuring proper operation of the wireless network.

The AP 205 may generate the TIM IE by identifying which STAs have buffered data awaiting delivery (e.g., which may be represented in a bitmap field within the TIM IE). The AP may include the TIM IE in a beacon payload of a beacon to provide real-time, or near real-time, information associated with buffered traffic. This information may be used by STAs to manage power-save modes of the STAs. The AP 205 may monitor network metrics, such as a number of associated STAs and channel utilization to generate the BSS load IE. The AP may include the BSS load IE in a beacon payload of a beacon to inform STAs about a network load (e.g., a current network load).

The AP 205 may derive information associated with the channel switch announcement IE from configuration updates and/or network adjustments. The AP 205 may include the channel switch announcement IE in a beacon payload of a beacon to notify STAs of upcoming channel changes. Accordingly, for example, the TIM IE, the BSS load IE, and the channel switch announcement IE may be associated with information that changes frequently.

As another example, the AP 205 may obtain a high throughput (HT) capabilities IE (e.g., identified by element ID: 45), a very high throughput (VHT) capabilities IE (e.g., identified by element ID: 191), and/or a high efficiency (HE) capabilities IE (e.g., identified by element ID: 255), among other examples, to include in a beacon payload of a beacon. The HT capabilities IE, the VHT capabilities IE, and/or the HE capabilities IE may provide information related to the capabilities of the AP 205 and the supported wireless communication features.

For example., the AP 205 may generate (e.g., during configuration) the HT capabilities IE based on the AP 205 supporting 802.11n features (e.g., MIMO capabilities and/or enhanced channel bandwidth options), the VHT capabilities IE based on the AP 205 supporting 802.11ac features, and the HE capabilities IE based on the AP 205 supporting 802.11ax features. The HT capabilities IE, the VHT capabilities IE, and the HE capabilities IE, which typically do not change frequently, may be included in a beacon payload of a beacon to inform the STA 210 about the capabilities of the AP 205.

The static nature of the HT, VHT, and HE capabilities IEs means that they generally remain unchanged unless the AP 205 implements updates, such as hardware upgrades and/or software updates based on an introduction of a new wireless communication standard (e.g., one or more new 802.11 standards, among other examples). By including the HT capabilities IE, the VHT capabilities IE, and the HE capabilities IE in a beacon payload of a beacon, the AP 205 enables the STA 210 to discover capabilities (e.g. network capabilities and/or capabilities of the AP 205), assess compatibility, and/or optimize configurations, among other examples.

Although the AP 205 is shown and described in connection with Fig. 2A as obtaining the SSID IE, the supported rates IE, the TIM IE, the BSS load IE, the channel switch announcement IE, the HT capabilities IE, the VHT capabilities IE, and the HE capabilities IE, the AP 205 may obtain any suitable IEs, such as new IEs defined according to an 802.11 standard, among other examples.

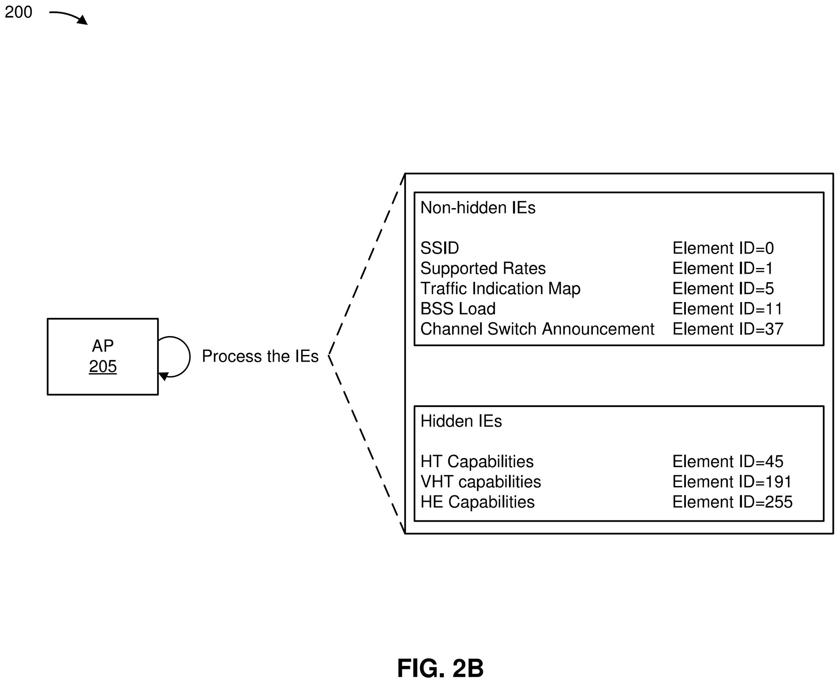

As shown in Fig. 2B, the AP 205 may process the IEs. For example, the AP 205 may process the IEs to determine a set of IEs to refrain from including in a beacon payload of a beacon by categorizing the IEs, associated with the AP 205, into one or more types. For example, the AP 205 may categorize the IEs as non-hidden IEs and hidden IEs (e.g., based on factors associated with the IEs, such as temporal characteristics of the IEs, a relevancy of the IEs to network operations, and/or visibility requirements of the IEs, among other examples).

In some implementations, the non-hidden IEs may include information associated with maintaining proper operation of the wireless network and/or information changes frequently (e.g., dynamic information representing real-time, or near real-time network and/or environmental conditions). Accordingly, for example, the AP 205 may classify the SSID IE and/or the supported rates IE as non-hidden IEs (e.g., because the SSID IE and the supported rates IE include information associated with ensuring proper operation of the wireless network, among other examples). As another example, the AP 205 may classify the TIM IE, the BSS load IE, and the channel switch announcement IE as non-hidden IEs (e.g., because the TIM IE, the BSS load IE, and the channel switch announcement IE are associated with information that changes frequently).

By classifying the SSID IE, the supported rates IE, the TIM IE, the BSS load IE, and/or the channel switch announcement IE as non-hidden IEs, the AP 205 may include these non-hidden IEs in a beacon payload of a beacon, as desired (e.g., the AP 205 may include the non-hidden IEs in all beacon payload of beacons transmitted by the AP 205 to enable the STA 210 to discover and/or interact with the network, even in dynamic environments). This approach enables the AP 205 to efficiently manage visibility and/or transmission of IEs, balancing a need for discoverability, performance, and security in the network.

In some implementations, the hidden IEs may include information that does not change or does not change frequently. For example, the hidden IEs may include information related to capabilities of the AP 205 that typically remain static and/or that do not change frequently. Accordingly, for example, the AP 205 may classify the HT capabilities IE, the VHT capabilities IE, and/or the HE capabilities IE as hidden IEs (e.g., because the HT capabilities IE, the VHT capabilities IE, and/or the HE capabilities IE are associated with information that remains static or does not change frequently).

By classifying the HT capabilities IE, the VHT capabilities IE, and/or the HE capabilities IE as hidden IEs, the AP 205 may refrain from including these hidden IEs in a beacon payload of a beacon, as described in more detail elsewhere herein (e.g., the AP 205 may refrain from including the hidden IEs in all beacon payloads of beacons transmitted by the AP 205).

Accordingly, in some implementations, the AP 205 may include non-hidden IEs in a beacon payload of a beacon and may refrain from including the hidden IEs in the beacon payload of the beacon. To inform the STA 210 that the AP 205 is associated with the hidden IEs, the AP 205 may provide an indicator (e.g., within the beacon payload of the beacon) that the AP 205 is associated with the hidden IEs, which are not indicated by the beacon payload of the beacon (e.g., the hidden IEs are not advertised via the beacon payload). In other words, the AP 205 may include the indicator in a beacon payload of a beacon to inform the STA 210 that receives the beacon that the AP 205 is associated with additional IEs (e.g., a set of hidden IEs) that are different than IEs included in the beacon payload (e.g., advertised via the beacon payload) of the beacon (e.g., a set of non-hidden IEs), as described in more detail elsewhere herein.

In some implementations, the indicator that the AP 205 is associated with the hidden IEs may be an IE included in a beacon payload of a beacon, such as a new IE (e.g., as defined by an 802.11 protocol). In other words, the AP 205 may use the new IE to communicate that the AP 205 is associated with hidden IEs, as described in more detail elsewhere herein. Additionally, or alternatively, the indicator may be included in communications (e.g., one or more association requests, association responses, probe requests and/or probe responses, among other examples), as described in more detail elsewhere herein.

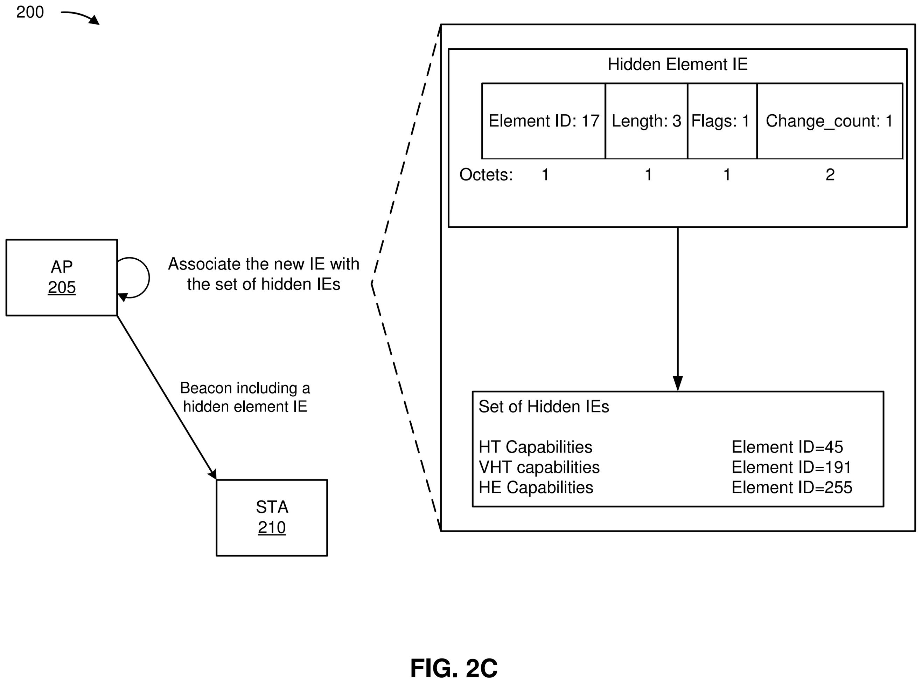

As shown in Fig. 2C, the AP 205 may associate the new IE (e.g., shown as a hidden element IE) with a set of IEs (e.g., shown as a set of hidden IEs). In some implementations, the hidden element IE may include an element ID field, a length field, a flags field, and a change count field (e.g., shown as a change_count field in Fig. 2C).

As further shown in Fig. 2C, a value of the element ID for the hidden element IE may be 17 (e.g., which is currently reserved and may be used for the hidden element IE). Because IEs in the beacon payload of the beacon are typically transmitted in ascending order of their element IDs, using the element ID value of 17 for the hidden element IE may enable the STA 210 to process the hidden element IE even if the STA 210 only receives a partial beacon, such as a few bytes of the beacon (e.g., because 17 is a relatively low number). Accordingly, and in some implementations, the hidden element IE may be temporally positioned within the beacon payload so as to be processed (e.g., by the STA 210) within a first percentage (e.g., a first 50% of IEs included in the beacon payload, among other examples) of IEs included in the beacon payload. In some implementations, the flags field may be associated with a bitmap having 7 bits where bits 0 and 1 are used for indicating information and bits 2 to 7 are reserved, as described in more detail elsewhere herein.

In some implementations, the change count field may be a free-running, incrementing counter that tracks modifications to the set of hidden IEs (e.g., modifications to a payload of a hidden IE included in the set of hidden IEs creating a set of modified hidden IEs). Accordingly, for example, each time a payload of a hidden IE, included in the set of hidden IEs, is modified, the change count field may increment by one, reflecting a most recent change in the set of hidden IEs creating the modified set of hidden IEs.

In this way, the AP 205 may include the modification indicator in a beacon payload that indicates that the set of hidden IEs have been modified into the modified set of hidden IEs. The modification indicator may enable the STA 210 to determine that the hidden IEs have been modified (e.g., into the modified set of hidden IEs). The STA 210 may request an indication of the modified set of hidden IEs, as described in more detail elsewhere herein.

For example, the STA 210 may operate in a power-save mode and listen for beacons transmitted by the AP 205 according to a listen interval (e.g., the STA 210 may wake up every third beacon transmission to listen for information). If the STA 210 detects that the modification indicator has changed, the STA 210 may request the indication of the modified hidden IEs. In this way, a value of the change count field may enable the STA 210 to determine that the set of hidden IEs has been modified into the modified set of hidden IEs and may request an indication of the modified set of hidden IEs from the AP 205, as described in more detail elsewhere herein.

In some implementations, the AP 205 may set bit-0 and/or bit-1 in the flags field of the hidden element IE to indicate information. For example, the AP 205 may set bit-0 in the flags field of the hidden element IE to indicate a presence of a set of non-hidden IEs (e.g., in a beacon payload of a beacon, a probe response payload of a probe response, and/or an association response payload of an association response). As another example, the AP 205 may set bit-1 flags field in the hidden element IE to indicate a presence of hidden IEs (e.g., in a beacon payload of a beacon, a probe response payload of a probe response, and/or an association response payload of an association response).

Additionally, or alternatively, the AP 205 may refrain from setting bit-1 in the flags field of the hidden element IE when the AP 205 includes the hidden element IE in a beacon payload of a beacon (e.g., because the set of hidden IEs do not need to be included in the beacon payload and may be requested by the STA 210).

As further shown in Fig. 2C, the AP 205 may transmit, and the STA 210 may receive, a beacon including a hidden element IE (e.g., included in the beacon payload of the beacon). The STA 210 may process the beacon, as described in more detail elsewhere herein. For example, the STA 210 may decode and extract information associated with the hidden element IE to determine whether to request one or more IEs from the AP 205, as described in more detail elsewhere herein. In some implementations, the STA 210 may include the hidden element IE in one or more communications, as described in more detail elsewhere herein. For example, the STA 210 may include the hidden element IE probe request payload of a probe request and/or an association request payload of an association request, among other examples.

In some implementations, the STA 210 may set bit-0 and/or bit-1 in the flags field of the hidden element IE to indicate information. For example, the STA 210 may set bit-0 in the flags field of the hidden element IE to indicate a request for a set of non-hidden IEs from the AP 205 (e.g., when the hidden element IE is transmitted in a probe request payload of a probe request and/or an association request payload of an association request).

As another example, the STA 210 may set bit-1 in the flags field of the hidden element IE to indicate a request for a set of hidden IEs from the AP 205 (e.g., when the hidden element IE is transmitted in a probe request payload of a probe request and/or an association request payload of an association request). This is useful when the STA 210 is associated to the AP 205 and determines that a change has been made to the set of hidden IEs creating the modified set of hidden IEs (e.g., because the STA 210 may request the indication of the modified set of hidden IEs), as described in more detail elsewhere herein.

As yet another example, the STA 210 may set bit-0 and bit-1 in the flags field of the hidden element IE to indicate a request for a set of non-hidden IEs and a set of hidden IEs from the AP 205. For example, if the STA 210 is in a scan phase (e.g., a passive scan phase and/or an active scan phase before the STA 210 has been associated to the AP 205).

As indicated above, Figs. 2A-2C are provided as an example. Other examples may differ from what is described with regard to Figs. 2A-2C.

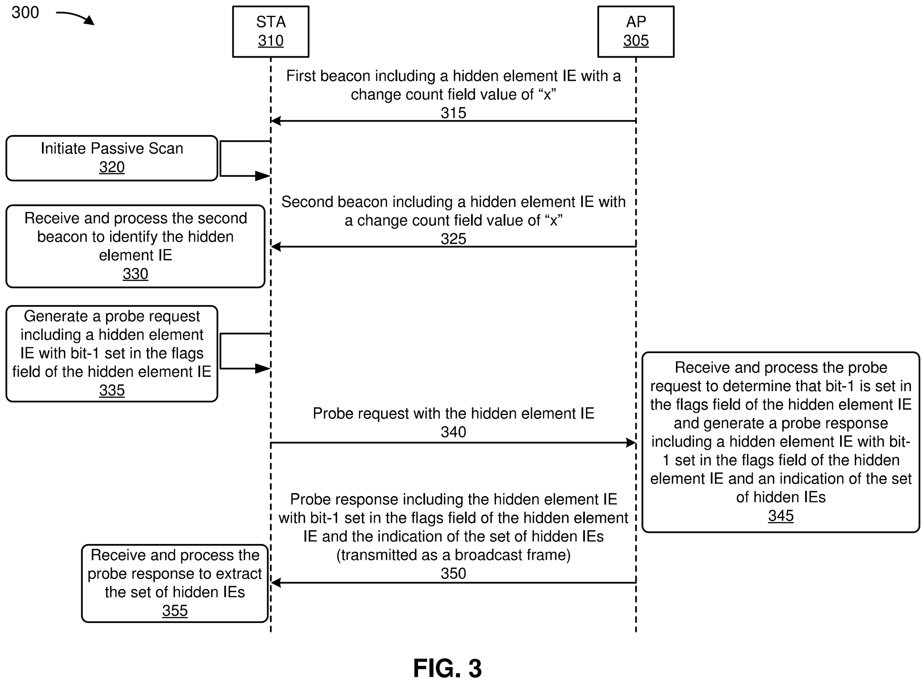

Fig. 3 is an example sequence diagram 300 associated with optimized beacon payloads. As shown in Fig. 3, the sequence diagram 300 includes an AP 305 and an STA 310.

As further shown in Fig. 3, and by reference number 315, the AP 305 may transmit a first beacon including a hidden element IE with a change count field value of "x" (e.g., the hidden element IE may be included in a beacon payload of the first beacon).

As further shown in Fig. 3, and by reference number 320, the STA 310 may initiate a passive scan (e.g., the STA 310 may initiate a passive scan phase or operation) to discover available wireless networks. During this passive scan, the STA 310 may listen for beacons transmitted by the AP 305 (e.g., without actively transmitting probe requests).

As further shown in Fig. 3, and by reference number 325, the AP 305 may transmit a second beacon including a hidden element IE with a change count field value of "x" (e.g., the hidden element IE may be included in a beacon payload of the second beacon).

As further shown in Fig. 3, and by reference number 330, the STA 310 may receive and process the second beacon to identify the hidden element IE. For example, the STA 310 may decode the beacon payload to detect and identify the hidden element IE. The STA 310 may determine that the AP 305 is associated with a set of hidden IEs (e.g.., based on the hidden element IE, as described in more detail elsewhere herein).

As further shown in Fig. 3, and by reference number 335, the STA 310 may generate a probe request including a hidden element IE (e.g., included in a probe request payload of the probe request) with bit-1 set in the flags field of the hidden element IE. Setting bit-1 in the flags field of the hidden element IE indicates a request for the set of hidden IEs from the AP 305, as described in more detail elsewhere herein.

As further shown in Fig. 3, and by reference number 340, the STA 310 may transmit a probe request with the hidden element IE (e.g., included in a probe request payload of the probe request) requesting a set of hidden element IEs. As further shown in Fig. 3, and by reference number 345, the AP 305 may receive and process the probe request to determine that bit-1 is set in the flags field of the hidden element IE. Based on bit-1 being set in the flags field of the hidden element IE, the AP 305 may generate a probe response including a hidden element IE with bit-1 set in the flags field of the hidden element IE (e.g., to indicate a presence of the set of hidden IEs in the probe response payload of the probe response) and an indication of the set of hidden IEs.

As further shown in Fig. 3, and by reference number 350, the AP 305 may transmit the probe response including the hidden element IE with bit-1 set in the flags field of the hidden element IE and the indication of the set of hidden IEs. In some implementations, the AP 305 may transmit the probe response as a broadcast frame (e.g., to enable other devices, such as other STAs, to receive and process the probe response to extract the set of hidden IEs). In this way, another STA intending to receive the set of hidden IEs from the AP 305 does not need to submit a separate probe request including the hidden element IE to request the indication of the set of hidden IEs from the AP 305.

As further shown in Fig. 3, and by reference number 355, the STA may receive and process the probe response (e.g., to obtain the set of hidden IEs). For example, the STA 310 may determine that bit-1 is set in the flags field of the hidden element IE. Based on bit-1 being set in the flags field of the hidden element IE, the STA 310 may decode and extract the set of hidden IEs from the probe response payload of the probe response.

As indicated above, Fig. 3 is provided as an example. Other examples may differ from what is described with regard to Fig. 3.

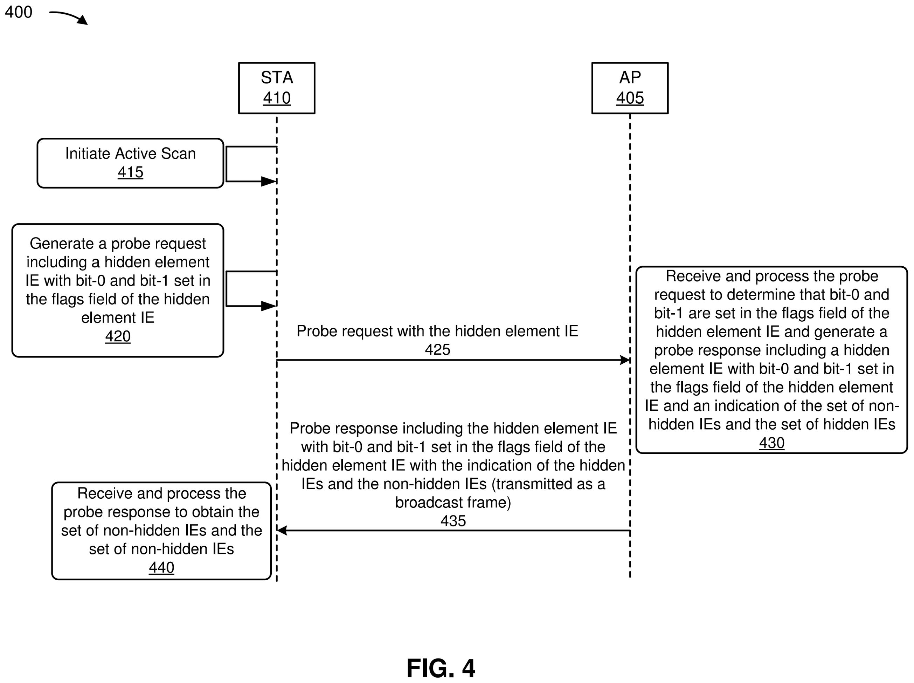

Fig. 4 is an example sequence diagram 400 associated with optimized beacon payloads. As shown in Fig. 4, the sequence diagram 400 includes an AP 405 and an STA 410.

As further shown in Fig. 4, and by reference number 415, the STA 410 may initiate an active scan (e.g., the STA 410 may initiate an active scan phase or operation) to discover available wireless networks.

As further shown in Fig. 4, and by reference number 420, the STA 410 may generate a probe request including a hidden element IE (e.g., included in a probe request payload of the probe request) with bit-0 and bit-1 set in the flags field of the hidden element IE. Setting bit-0 and bit-1 in the flags field of the hidden element IE indicates a request for a set of non-hidden IEs and a set of hidden IEs from the AP 405, as described in more detail elsewhere herein.

As further shown in Fig. 4, and by reference number 425, the STA 410 may transmit the probe request with the hidden element IE (e.g., in the probe request payload of the probe request). As further shown in Fig. 4, and by reference number 430, the AP 305 may receive and process the probe request to determine that bit-0 and bit-1 are set in the flags field of the hidden element IE. Based on bit-0 and bit-1 being set in the flags field of the hidden element IE, the AP 405 may generate a probe response including a hidden element IE with bit-0 and bit-1 set in the flags field of the hidden element IE (e.g., to indicate a presence of the set of non-hidden IEs and the set of hidden IEs in the probe response payload of the probe response) and an indication of the non-hidden IEs and the hidden IEs. In some implementations, the AP 405 may transmit the probe response as a broadcast frame, as described in more detail elsewhere herein.

As further shown in Fig. 4, and by reference number 435, the AP 405 may transmit the probe response including the hidden element IE with bit-0 and bit-1 set in the flags field of the hidden element IE and the indication of the non-hidden IEs and the hidden IEs.

As further shown in Fig. 4, and by reference number 440, the STA 410 may receive and process the probe response (e.g., to obtain the set of non-hidden IEs and the set of hidden IEs). For example, the STA 410 may determine that bit-0 and bit-1 are set in the flags field of the hidden element IE. Based on bit-0 and bit-1 being set in the flags field of the hidden element IE, the STA 410 may decode and extract the set of non-hidden IEs and the set of hidden IEs from the probe response payload of the probe response.

As indicated above, Fig. 4 is provided as an example. Other examples may differ from what is described with regard to Fig. 4.

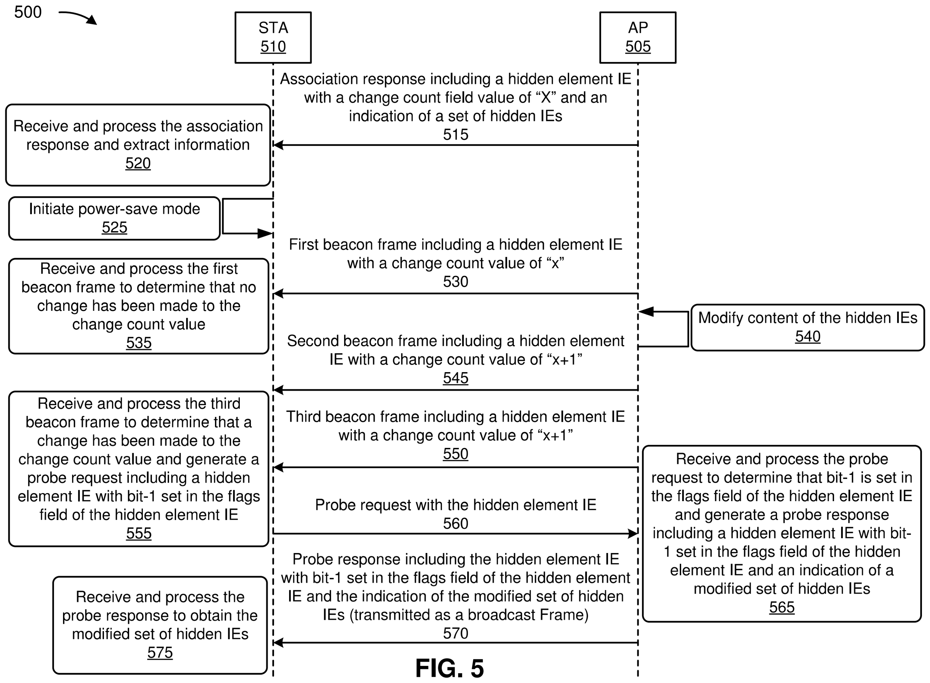

Fig. 5 is an example sequence diagram 500 associated with optimized beacon payloads. As shown in Fig. 5, the sequence diagram 500 includes an AP 505 and an STA 510.

As further shown in Fig. 5, and by reference number 515, the AP 505 may transmit an association response including a hidden element IE with a change count field value of "x" and an indication of a set of hidden IEs.

As further shown in Fig. 5, and by reference number 520, the STA 510 may receive and process the association response to extract information. For example, the STA 510 may extract the set of hidden IEs (e.g., from the indication of the hidden IEs) and may store (e.g., in a memory associated with the STA 510) a change count field value of "x."

As further shown in Fig. 5, and by reference number 525 the STA 510 may initiate a power-save mode, as described in more detail elsewhere herein. As further shown in Fig. 5, and by reference number 530, the AP 505 may transmit a first beacon including a hidden element IE with a change count field value of "x."

As further shown in Fig. 5, and by reference number 535, the STA 510 may receive and process the first beacon to determine that no change has been made to the change count value (e.g., the change count value of "x" stored by the memory of the STA 510 matches the change count value of "x" indicated in the hidden element IE included in the first beacon).

As further shown in Fig. 5, and by reference number 540, the AP 505 may modify content of the set of hidden IEs to create a modified set of hidden IEs. As further shown in Fig. 5, and by reference number 545, the AP 505 may transmit a second beacon including a hidden element IE with a change count field value of "x + 1" (e.g., indicating that that the set of hidden IEs has been modified into the modified set of hidden IEs).

As further shown in Fig. 5, and by reference number 550, the AP 505 may transmit a third beacon including a hidden element IE with a change count field value of "x + 1." As further shown in Fig. 5, and by reference number 555, the STA 510 may receive (e.g., according to a listen interval associated with a power-save state or mode of the STA 510) and process the third beacon to determine that a change has been made to one or more hidden IEs, included in the set of hidden IEs (e.g., based on the change count value of "x" stored by the memory of the STA 510 being incremented to the change count value of "x + 1"). Based on the change being made to the one or more hidden IEs included in the set of hidden IEs, the STA 510 may generate a probe request including a hidden element IE with bit-1 set in the flags field of the hidden element IE (e.g., to indicate a request for an indication of the modified set of hidden IEs from the AP 505).

As further shown in Fig. 5, and by reference number 560, the STA 510 may transmit the probe request with the hidden element IE (e.g., with bit-1 set in the flags field of the hidden element IE). As further shown in Fig. 5, and by reference number 565, the AP 505 may receive and process the probe request to determine that bit-1 is set in the flags field of the hidden element IE. Based on bit-1 being set in the flags field of the hidden element IE, the AP 505 may generate a probe response including a hidden element IE with bit-1 set in the flags field of the hidden element IE (e.g., to indicate a presence of the modified set of hidden IEs in the probe response payload of the probe response) and an indication of the modified set of hidden IEs.

As further shown in Fig. 5, and by reference number 570, the AP 305 may transmit the probe response including the hidden element IE with bit-1 set in the flags field of the hidden element IE and the indication of the modified set of hidden IEs (e.g., the AP 505 may transmit the probe response as a broadcast frame, as described in more detail elsewhere herein).

As further shown in Fig. 5, and by reference number 575, the STA 510 may receive and process the probe response (e.g., to obtain the modified set of hidden IEs). For example, the STA 510 may determine that bit-1 is set in the flags field of the hidden element IE. Based on bit-1 being set in the flags field of the hidden element IE, the STA 510 may decode and extract the set of modified hidden IEs from the probe response payload of the probe response.

As indicated above, Fig. 5 is provided as an example. Other examples may differ from what is described with regard to Fig. 5.

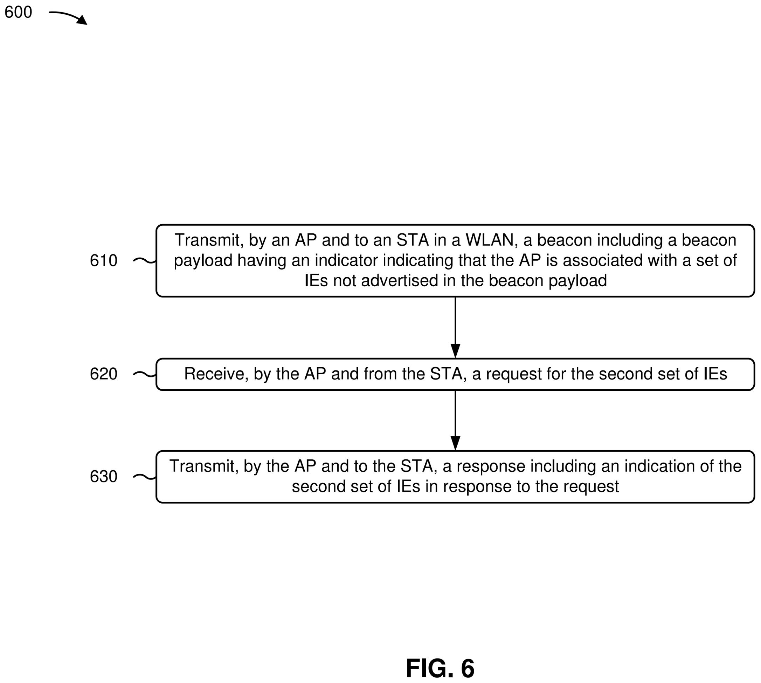

Fig. 6 is a flowchart of an example process 600 associated with optimized beacon payloads. In some implementations, one or more process blocks of Fig. 6 may be performed by an AP (e.g., the network device 104, the AP 305, the AP 405, and/or the AP 505). In some implementations, one or more process blocks of Fig. 6 may be performed by another device, or a group of devices, separate from or including the AP, such as an STA (e.g., the wireless communication device 106, the STA 310, the STA 410, and/or the STA 510,). Additionally, or alternatively, one or more process blocks of Fig. 6 may be performed by one or more components of the computing device 114.

As shown in Fig. 6, the process 600 may include transmitting, by an AP and to an STA in a WLAN, a beacon including a beacon payload having an indicator indicating that the AP is associated with a set of IEs not advertised in the beacon payload (block 610). For example, the AP may transmit, to the STA in the WLAN, a beacon including a beacon payload having an indicator indicating that the AP is associated with a set of IEs not advertised in the beacon payload, as described above. In some implementations, a first set of IEs associated with the access point (e.g., a set of non-hidden IEs) may be advertised within the beacon payload. The beacon payload may include an indicator (e.g., a hidden element IE) indicating that the AP is associated with a second set of IEs (e.g., a set of hidden IEs) that is not advertised in the beacon payload. In some implementations, the indicator may be an IE defined according to an 802.11 protocol (e.g., the hidden element IE).

As further shown in Fig. 6, the process 600 may include receiving, by the AP and from the STA, a request for the second set of IEs (block 620). For example, the AP may receive, from the STA, a request for the second set of IEs, as described in more detail elsewhere herein.

As further shown in Fig. 6, the process 600 may include transmitting, by the AP and to the STA, a response including an indication of the second set of IEs in response to the request (block 630). For example, the AP may transmit, to the STA and in response to the request, an indication of the second set of IEs, as described in more detail elsewhere herein.

In some implementations, the AP may categorize the first set of IEs and the second set of IEs based on at least one of temporal characteristics, relevancy, or visibility requirements. In some implementations, the indicator may be temporally positioned within the beacon payload so as to be processed within a first percentage of IEs included in the beacon payload (e.g., a first 50% of IEs included in the beacon payload).

In some implementations, the indicator may include an element ID field, a length field, a flags field, and a change count field. In some implementations, the AP may receive, from the STA, a request for the first set of IEs and the second set of IEs. The AP may transmit, to the STA and based on the request, a response including an indication of the first set of IEs and the second set of IEs.

In some implementations, the AP may receive, from the STA, a request for the second set of IEs. The AP may transmit, in response to the request, a response, including an indication of the second set of IEs, as a broadcast frame to allow a different STA to receive the response including the indication of the second set of IEs. In some implementations, the AP may be associated with the STA before the AP transmits the beacon. In some implementations, the indicator may be an IE including a field having a settable value. For example, the settable value may be configurable between states indicating, when included in a communication received by the AP, a request for: the first set of IEs, the second set of IEs, or the first set of IEs and the second set of IEs.

As another example, the settable value may be configurable between states indicating, when included in a communication transmitted by the AP, that the first set of IEs is included in the communication, the second set of IEs is included in the communication, or the first set of IEs and the second set of IEs are included in the communication.

In some implementations, the beacon may be received (e.g., by the STA) in association with a listen interval based on a power-save state of the STA. In some implementations, the AP may transmit, to the STA, a subsequent beacon including a subsequent beacon payload. The subsequent beacon payload may include a modification indicator indicating that the second set of IEs has been modified into a modified second set of IEs. The second set of IEs may not be advertised in the subsequent beacon payload.

In some implementations, the AP may receive, from the STA, a request for the modified second set of IEs. The AP may transmit, to the STA and based on the request, a response including an indication of the modified second set of IEs.

Although Fig. 6 shows example blocks of the process 600, in some implementations, the process 600 may include additional blocks, fewer blocks, different blocks, or differently arranged blocks than those depicted in Fig. 6. Additionally, or alternatively, two or more of the blocks of process 600 may be performed in parallel.

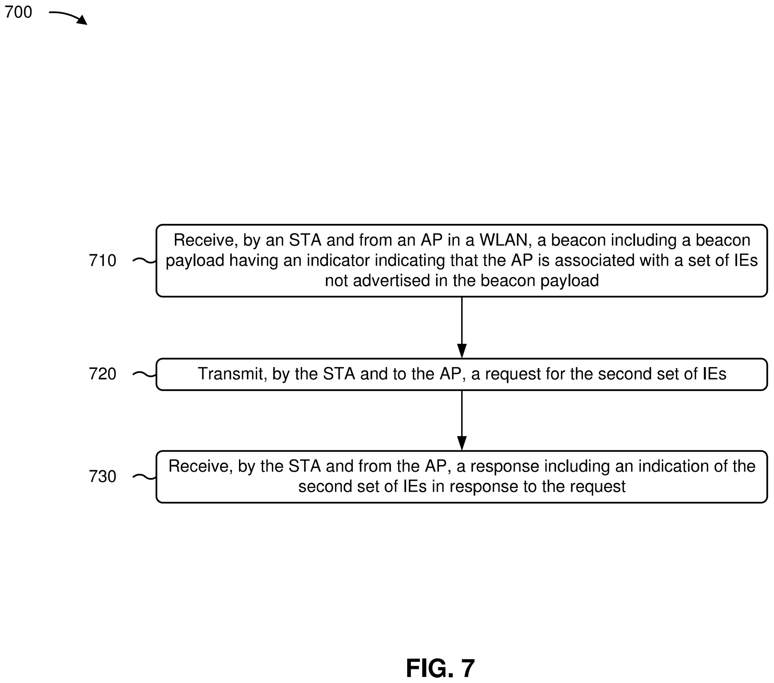

Fig. 7 is a flowchart of an example process 700 associated with optimized beacon payloads. In some implementations, one or more process blocks of Fig. 7 may be performed by an STA (e.g., the wireless communication device 106, the STA 310, the STA 410, and/or the STA 510). In some implementations, one or more process blocks of Fig. 7 may be performed by another device, or a group of devices, separate from or including the STA, such as an AP (e.g., the network device 104, the AP 305, the AP 405, and/or the AP 505). Additionally, or alternatively, one or more process blocks of Fig. 7 may be performed by one or more components of the computing device 114.

As shown in Fig. 7, the process 700 may include receiving, by an STA and from an AP in a WLAN, a beacon including a beacon payload having an indicator indicating that the AP is associated with a set of IEs not advertised in the beacon payload (block 710). For example, the STA may receive, from the AP in the WLAN, a beacon including a beacon payload having an indicator indicating that the AP is associated with a set of IEs not advertised in the beacon payload, as described in more detail elsewhere herein. In some implementations, the beacon may be received based on at least one of a passive scan operation performed by the STA, or an active scan operation performed by the STA.

As further shown in Fig. 7, the STA may transmit, to AP, a request for the second set of information elements (block 720). For example, the STA may transmit, to AP, a request for the second set of IEs, as described in more detail elsewhere herein.

As further shown in Fig. 7, the STA may receive, from the AP, a response including an indication of the second set of IEs receive in response to the request (block 730). For example, the STA may receive, from the AP, a response including an indication of the second set of IEs receive in response to the request, as described in more detail elsewhere herein.

In some implementations, the STA may receive, from the AP, a subsequent beacon including a subsequent beacon payload. The subsequent beacon payload may include a modification indicator (e.g., a change count value of a change count field) indicating that the second set of IEs has been modified into a modified second set of IEs. The modified second set of IEs is not advertised in the subsequent beacon payload. The STA may transmit, to the AP, a request for the modified second set of IEs. The STA may receive, from the AP and in response to the request, a response including an indication of the modified second set of IEs.

Although Fig. 7 shows example blocks of the process 700, in some implementations, the process 700 may include additional blocks, fewer blocks, different blocks, or differently arranged blocks than those depicted in Fig. 7. Additionally, or alternatively, two or more of the blocks of process 700 may be performed in parallel.

Furthermore, although some implementations described herein are associated with exchange of a hidden element IE among APs and/or STAs, the systems and methods described herein may be applied to any suitable wireless communication protocols, such as wireless communication protocols that utilize periodic frames (e.g., frames transmitted at regular intervals) for exchanging information (e.g., to enable devices to connect to a network, perform synchronization operations, and/or maintain connectivity with the network, among other examples).

Some implementations provided herein enable optimized communications in a WLAN. For example, a device may generate a beacon including a beacon payload. A first set of IEs, associated with an AP in the WLAN, may not be advertised in the beacon payload. The beacon payload may include an indicator indicating that the AP is associated with a second set of IEs that may not be advertised in the beacon payload. The device may transmit, to an STA in the WLAN, the beacon.

Additionally, the functionality of the elements described herein may be implemented using circuitry or processing circuitry, including general-purpose processors, special-purpose processors, integrated circuits, application-specific integrated circuits (ASICs), conventional circuitry, or combinations thereof, configured or programmed to perform the disclosed functionality. A processor is a type of processing circuitry, as it includes transistors and other physical circuit components. A processor may execute instructions stored in a memory, thereby operating as a programmed processor. In this disclosure, the terms "circuitry," "units," or "means" refer to hardware that performs, or is programmed to perform, the described functionality. Such hardware may include any disclosed hardware or other known hardware that is configured or programmed to execute the described functions. When the hardware includes a processor, which is a type of circuitry, the circuitry, means, or units refer to a combination of hardware and software, where the software configures the hardware and/or processor to perform the specified functions.

Even though particular combinations of features are recited in the claims and/or described in this disclosure, these combinations are not intended to limit the disclosure of various implementations. In fact, many of these features may be combined in ways not specifically recited in the claims and/or described in this disclosure. Although each dependent claim listed below may directly depend on only one claim, the disclosure of various implementations includes each dependent claim in combination with every other claim in the claim set.

When an element is referred to herein as being "connected" or "coupled" to another element, it should be understood that the elements can be directly connected to the other element or have intervening elements present between the elements. In contrast, when an element is referred to as being "directly connected" or "directly coupled" to another element, it should be understood that no intervening elements are present in the "direct" connection between the elements. However, the existence of a direct connection does not exclude other connections, in which intervening elements may be present.

As used herein, a phrase referring to "at least one of" a list of items refers to any combination and permutation of those items, including single members (e.g., an individual item in the list of items). As an example, "at least one of: a, b, or c" is intended to cover a, b, c, a-b, a-c, b-c, and a-b-c, as well as any combination with multiple of the same item. As used herein, the term "and/or" used to connect items in a list refers to any combination and any permutation of those items, including single members (e.g., an individual item in the list of items). As an example, "a, b, and/or c" is intended to cover a, b, c, a-b, a-c, b-c, and a-b-c.

No element, act, or instruction described herein should be construed as critical or essential unless explicitly described as such. Also, as used herein, the articles "a" and "an" are intended to include one or more items and may be used interchangeably with "one or more." Further, as used herein, the article "the" is intended to include one or more items referenced in connection with the article "the" and may be used interchangeably with "the one or more." Furthermore, as used herein, the term "set" is intended to include one or more items (e.g., related items, unrelated items, or a combination of related and unrelated items), and may be used interchangeably with "one or more." Where only one item is intended, the phrase "only one" or similar language is used herein. Also, as used herein, the terms "has," "have," "having," or the like are intended to be open-ended terms. Further, the phrase "based on" is intended to mean "based, at least in part, on" unless explicitly stated otherwise. Also, as used herein, the term "or" is intended to be inclusive when used in a series and may be used interchangeably with "and/or," unless explicitly stated otherwise (e.g., if used in combination with "either" or "only one of").

In the preceding specification, various example embodiments have been described with reference to the accompanying drawings. It will, however, be evident that various modifications and changes may be made thereto, and additional embodiments may be implemented, without departing from the broader scope of the invention as set forth in the claims that follow. The specification and drawings are accordingly to be regarded in an illustrative rather than restrictive sense.

## Claims

1. An access point in a wireless local area network (WLAN), comprising:
circuitry configured to:
transmit, to a station in the WLAN, a beacon including a beacon payload,
wherein a first set of information elements associated with the access point is advertised within the beacon payload, and
wherein the beacon payload includes an indicator indicating that the access point is associated with a second set of information elements that is not advertised in the beacon payload.

2. The access point of claim 1, wherein
the indicator is an information element defined according to an 802.11 protocol.

3. The access point of claim 1 or 2, wherein the circuitry is further configured to:
receive, from the station, a request for the second set of information elements; and
transmit, to the station and in response to the request, a response including an indication of the second set of information elements.

4. The access point of any one of the claims 1 to 3, wherein the circuitry is further configured to:
categorize the first set of information elements and the second set of information elements based on at least one of temporal characteristics, relevancy, or visibility requirements.

5. The access point of any one of the claims 1 to 4, wherein
the indicator is temporally positioned within the beacon payload so as to be processed within a first 50% of information elements included in the beacon payload.

6. The access point of any one of the claims 1 to 5, wherein
the indicator includes an element identifier field, a length field, a flags field, and a change count field.

7. The access point of any one of the claims 1 to 6,
wherein the circuitry is further configured to:
receive, from the station, a request for the first set of information elements and the second set of information elements; and
transmit, to the station and based on the request, a response including an indication of the first set of information elements and the second set of information elements;
and/or
wherein the circuitry is further configured to:
receive, from the station, a request for the second set of information elements; and
transmit, in response to the request, a response, including an indication of the second set of information elements, as a broadcast frame to allow a different station to receive the response including the indication of the second set of information elements.

8. The access point of any one of the claims 1 to 7, wherein
the access point is associated with the station before the access point transmits the beacon.

9. The access point of any one of the claims 1 to 8,
wherein the indicator is an information element including a field having a settable value, and
wherein the settable value is configurable between states indicating, when included in a communication received by the access point, a request for:
the first set of information elements,
the second set of information elements, or
the first set of information elements and the second set of information elements.
or
wherein the indicator is an information element including a field having a settable value, and
wherein the settable value is configurable between states indicating, when included in a communication transmitted by the access point, that:
the first set of information elements is included in the communication,
the second set of information elements is included in the communication, or
the first set of information elements and the second set of information elements are included in the communication.

10. The access point of any one of the claims 1 to 9, wherein the circuitry is further configured to:
wherein the beacon is received in association with a listen interval based on a power-save state of the station.

11. The access point of any one of the claims 1 to 10, wherein the circuitry is further configured to:
transmit, to the station, a subsequent beacon including a subsequent beacon payload,
wherein the subsequent beacon payload includes a modification indicator indicating that the second set of information elements has been modified into a modified second set of information elements, and
wherein the modified second set of information elements is not advertised in the subsequent beacon payload;
wherein in particular
the circuitry is further configured to:
receive, from the station, a request for the modified second set of information elements; and
transmit, to the station and based on the request, a response including an indication of the modified second set of information elements.

12. A station in a wireless local area network, WLAN, comprising:
circuitry configured to:
receive, from an access point in the WLAN, a beacon including a beacon payload,
wherein a first set of information elements associated with the access point is advertised within the beacon payload, and
wherein the beacon payload includes an indicator indicating that the access point is associated with a second set of information elements that is not advertised in the beacon payload;
wherein in particular
the indicator is an information element defined according to an 802.11 protocol.

13. The station of claim 12, wherein
the beacon is received based on at least one of:
a passive scan operation performed by the station, or
an active scan operation performed by the station.

14. The station of claim 12 or 13, wherein the circuitry is further configured to:
transmit, to the access point, a request for the second set of information elements; and
receive, from the access point and in response to the request, a response including an indication of the second set of information elements;
and/or
wherein the circuitry is further configured to:
receive, from the access point, a subsequent beacon including a subsequent beacon payload,
wherein the subsequent beacon payload includes a modification indicator indicating that the second set of information elements has been modified into a modified second set of information elements, and
wherein the modified second set of information elements is not advertised in the subsequent beacon payload;
transmit, to the access point, a request for the modified second set of information elements; and
receive, from the access point and in response to the request, a response including an indication of the modified second set of information elements.

15. A method for optimized communications in a wireless local area network, WLAN, the method comprising:
generating, by a device, a beacon including a beacon payload,
wherein a first set of information elements, associated with an access point in the WLAN, is advertised in the beacon payload, and
wherein the beacon payload includes an indicator indicating that the access point is associated with a second set of information elements that is not advertised in the beacon payload; and
transmitting, by the device and to a station in the WLAN, the beacon.
